# FASCICULE DE BREVET EUROPEEN

(11) **EP 4 153 474 B1**
(45) Date de publication et mention de la délivrance du brevet: **05.03.2025**
(21) Numéro de dépôt: 21725495.2
(22) Date de dépôt: 11.05.2021
(51) Int. Cl.: B63B 25/00, B63B 43/04

(54) **ESTIMATION D'UNE REPONSE EN BALLOTTEMENT D'UNE CUVE PAR UN MODELE STATISTIQUE ENTRAINE PAR APPRENTISSAGE AUTOMATIQUE**
SCHÄTZUNG EINER TANKSCHWAPPREAKTION UNTER VERWENDUNG EINES DURCH MASCHINENLERNEN TRAINIERTEN STATISTISCHEN MODELLS
ESTIMATION OF A TANK SLOSHING RESPONSE USING A STATISTICAL MODEL TRAINED BY MACHINE LEARNING

(30) Priorité: 20.05.2020 FR 2005227
(43) Date de publication de la demande: 29.03.2023
(73) Titulaire: GAZTRANSPORT ET TECHNIGAZ, 78470 Saint-Rémy-lès-Chevreuse (FR)
(72) Inventeur: OUVRARD, Florent, 78470 SAINT REMY LES CHEVREUSE (FR); SIBRA, Alaric, 78470 SAINT REMY LES CHEVREUSE (FR)
(74) Mandataire: Loyer & Abello
(86) Numéro de dépôt international: PCT/EP2021/062532
(87) Numéro de publication internationale: WO 2021/233742

(56) Documents cités:
- WO-A1-2010/059307
- WO-A1-2010/130925
- WO-A1-2018/184222
- US-B1- 8 643 509
- AHN YANGJUN ET AL: "Database of model-scale sloshing experiment for LNG tank and application of artificial neural network for sloshing load prediction", MARINE STRUCTURES, vol. 66, 1 July 2019 (2019-07-01), AMSTERDAM, NL, pages 66 - 82, XP055824800, ISSN: 0951-8339, DOI: 10.1016/j.marstruc.2019.03.005

## Description

### Domaine technique

L'invention se rapporte à l'estimation d'une réponse en ballottement d'une cuve étanche et thermiquement isolante pour le transport de gaz liquéfié. Plus particulièrement, l'invention se rapporte à des procédés d'obtention d'un modèle statistique apte à estimer une réponse en ballottement d'une telle cuve, à des procédés d'obtention d'une base de données utilisable pour estimer une réponse en ballottement d'une telle cuve, et à des systèmes de gestion pour un navire comportant au moins une telle cuve. Dans ce document, le terme « navire » désigne un moyen transporteur et/ou utilisateur, pour sa propre propulsion, de gaz liquéfié entre deux points du globe ou une unité flottante de traitement et/ou de stockage d'un ou plusieurs gaz liquéfiés. De manière classique pour les navires utilisateurs de gaz liquéfié comme carburant, on peut citer les navires propulsés au GNL, les porte-conteneurs, les bateaux de croisières ou les vraquiers.

### Arrière-plan technologique

Les cuves étanches et thermiquement isolantes sont couramment utilisées pour le stockage et/ou le transport de gaz liquéfié à basse température, telles que des cuves pour le transport de Gaz de Pétrole Liquéfié (aussi appelé GPL) présentant par exemple une température comprise entre -50°C et 0°C, ou pour le transport de Gaz Naturel Liquéfié (GNL) à environ -162°C à pression atmosphérique. Ces cuves peuvent être destinées au transport de gaz liquéfié et/ou à recevoir du gaz liquéfié servant de carburant pour la propulsion de l'ouvrage flottant. De nombreux gaz liquéfiés peuvent aussi être envisagés, notamment le méthane, l'éthane, le propane, le butane, l'ammoniac, le dihydrogène ou l'éthylène.

Les cuves de navire peuvent être des cuves à membrane d'étanchéité simple ou double qui permettent un transport à la pression atmosphérique. Les membranes d'étanchéité sont généralement réalisées en fine feuille d'acier inoxydable ou en Invar. Une membrane est généralement en contact direct avec le gaz liquéfié.

Durant son transport, le liquide contenu dans une cuve est soumis à différents mouvements. En particulier, les mouvements en mer d'un navire, par exemple sous l'effet des conditions climatiques telles que l'état de la mer ou le vent, entraînent une agitation du liquide dans la cuve. L'agitation du liquide, généralement désignée sous le terme de « sloshing » ou ballottement, engendre des contraintes sur les parois de la cuve qui peuvent nuire à l'intégrité de la cuve.

Ces phénomènes de ballottement apparaissent sur des navires transporteurs et/ou utilisateurs (souvent désignés en tant que navires « LNG as Fuel » en anglais) de gaz naturel, ci-après GNL, ou des méthaniers ainsi que sur des navires de stockage ancrés appelés FPSO (de l'anglais : Floating Production Storage & Offloading) telles que par exemple une plate-forme d'extraction et une usine de liquéfaction de gaz naturel, communément appelée FLNG (de l'anglais : Floating Liquefied Natural Gas) ou une unité flottante de stockage et de regazéification, communément appelée FSRU (de l'anglais : Floating Storage and Regaseification Unit), c'est-à-dire plus généralement un support flottant de production, de stockage et d'exportation. Les phénomènes de ballottement se produisent aussi bien dans des conditions de mer agitée que dans des conditions de mer presque tranquille, dès lors que la cargaison de gaz liquéfié entre en résonance avec l'excitation créée par une houle, même faible, à laquelle est soumis le navire. Dans ces cas de résonance, le ballotement peut devenir extrêmement violent notamment lors des déferlements sur les parois verticales ou dans les angles, risquant ainsi de détériorer le système de confinement du gaz liquéfié, ou le système d'isolation présent juste derrière ledit système de confinement.

Or, l'intégrité de la cuve est particulièrement importante dans le cadre d'une cuve de gaz liquéfié, tel que par exemple du GNL, de par la nature inflammable ou explosive du liquide transporté et le risque de point froid sur la coque en acier de l'unité flottante en cas de fuite.

Le brevet US 8,643,509 dévoile une méthode de réduction du risque lié au ballottement d'une cargaison de gaz liquéfié. Dans ce document, une fréquence de résonance du liquide dans une cuve est estimée en fonction de la cuve et de son niveau de remplissage. Durant le transport, une fréquence de mouvement du navire est évaluée en fonction des conditions climatiques et maritimes et de la vitesse du navire. Des fréquences de mouvement prévisionnelles sont aussi évaluées sur la route à suivre du navire. Lorsque l'une des fréquences de mouvement se rapproche trop de la fréquence de résonnance du liquide dans une cuve, une alarme est signalée pour changer de route et/ou changer la vitesse du navire afin d'éviter de se retrouver dans une situation à risque.

Malgré la mise en place de mesure de réduction de ballottement, le ballottement des liquides dans les cuves, en particulier du fait des phénomènes de résonance, peut entraîner des risques ponctuels de déformation de la membrane primaire d'étanchéité primaire, d'endommagement des structures sous-jacentes présentes dans les espaces primaire et/ou secondaire sur lesquelles repose la membrane d'étanchéité primaire, des chutes d'objets, en particulier provenant d'équipement statique, susceptibles d'endommager à court ou moyen terme la membrane d'étanchéité primaire, ou plus généralement des déformations de la membrane d'étanchéité primaire au-delà de ses tolérances structurelles.

La publication de Yangjun Ahn, Yonghwan Kim, Sang-Yeob Kim (2019). Database of model-scale sloshing experiment for LNG tank and application of artificial neural network for sloshing load prediction, Marine Structures, Vol. 66, pp. 66-82, divulgue un procédé permettant d'estimer une réponse en ballottement des cuves pendant la navigation d'un navire. Ce document décrit l'utilisation de données d'essais pour l'entraînement d'un réseau de neurones artificiel. La publication ne décrit pas l'obtention d'une base de données utilisable pour estimer une réponse en ballottement d'une cuve d'un navire, la base de données étant obtenue à partir d'un modèle statistique.

Il existe donc toujours un besoin de méthodes permettant d'estimer une réponse en ballottement des cuves pendant la navigation du navire et le cas échéant de prendre les mesures nécessaires pour éviter l'apparition d'un ballottement excessif risquant d'endommager la membrane d'étanchéité primaire de la cuve.

### Résumé

Une idée à la base de l'invention est d'entraîner, par une méthode d'apprentissage automatique supervisé, un modèle statistique apte à estimer une réponse en ballottement de la cuve en fonction d'un niveau de remplissage de la cuve et d'un état courant de mer et optionnellement d'au moins l'un parmi un tirant d'eau du navire, une vitesse du navire et un cap du navire. Le modèle statistique est entraîné sur un ensemble de données d'essais obtenu à partir de résultats d'une pluralité d'essais consistant chacun à soumettre une cuve d'essai présentant un niveau de remplissage donné à des mouvements et à mesurer une pression sur au moins un point d'une paroi de la cuve d'essai et/ou un nombre d'impacts sur au moins une paroi de la cuve d'essai. Le modèle statistique peut ensuite être utilisé pour estimer une réponse en ballottement d'une cuve dans le cadre d'un système de gestion pour un navire, par exemple en construisant une base de données qui est utilisable pour une consultation en temps réel.

L'invention est définie par les revendications en annexe.

Selon une première variante, l'invention implique un procédé d'obtention d'un modèle statistique apte à estimer une réponse en ballottement d'au moins une cuve étanche et thermiquement isolante pour le transport de gaz liquéfié, le procédé comprenant une étape consistant à :
- entraîner un modèle statistique par une méthode d'apprentissage automatique supervisé sur un ensemble de données d'essais, le modèle statistique étant apte à estimer une réponse en ballottement de la cuve en fonction d'un niveau de remplissage de la cuve et d'un état courant de mer et optionnellement d'au moins l'un parmi un tirant d'eau du navire, une vitesse du navire et un cap du navire, et l'ensemble de données d'essais étant obtenu à partir de résultats d'une pluralité d'essais consistant chacun à soumettre une cuve d'essai présentant un niveau de remplissage donné à des mouvements et à mesurer une pression sur au moins un point d'une paroi de la cuve d'essai et/ou un nombre d'impacts sur au moins une paroi de la cuve d'essai.

Selon une deuxième variante, l'invention implique aussi un procédé d'obtention d'un modèle statistique apte à estimer une réponse en ballottement d'au moins une cuve étanche et thermiquement isolante pour le transport de gaz liquéfié, le procédé comprenant une étape consistant à :
- entraîner un modèle statistique par une méthode d'apprentissage automatique supervisé sur un ensemble de données d'essais, le modèle statistique étant apte à estimer une réponse en ballottement de la cuve en fonction d'un niveau de remplissage de la cuve, d'un état courant de mouvement du navire et optionnellement d'au moins l'un parmi un tirant d'eau du navire, une vitesse du navire et un cap du navire, et l'ensemble de données d'essais étant obtenu à partir de résultats d'une pluralité d'essais consistant chacun à soumettre une cuve d'essai présentant un niveau de remplissage donné à des mouvements et à mesurer une pression sur au moins un point d'une paroi de la cuve d'essai et/ou un nombre d'impacts sur au moins une paroi de la cuve d'essai.

On entend par « méthode d'apprentissage automatique supervisé » (en anglais : supervised learning) une méthode d'apprentissage automatique (en anglais : machine learning ; aussi désignée en français par les appellations apprentissage artificiel ou apprentissage statistique) consistant à apprendre une fonction de prédiction à partir d'exemples annotés. Autrement dit, une méthode d'apprentissage automatique supervisé permet de construire un modèle apte à la prévision à partir d'une pluralité d'exemples pour lesquels la réponse à prédire est connue. Une méthode d'apprentissage automatique supervisé est typiquement mise en œuvre par ordinateur ; l'étape consistant à entraîner le modèle statistique est ainsi typiquement mise en œuvre par ordinateur.

Le modèle statistique à entraîner dans le cadre de la présente invention est apte à estimer une réponse en ballottement, laquelle comprend une ou plusieurs variables quantitatives, au moins en fonction d'un niveau de remplissage de la cuve et d'un état courant de mer ou d'un état courant de mouvement du navire. Le modèle statistique à entraîner est donc apte à répondre à un problème de régression.

Grâce à l'étape consistant à entraîner le modèle statistique par une méthode d'apprentissage automatique supervisé sur l'ensemble de données d'essais, le modèle statistique est apte à estimer par le calcul une réponse en ballottement d'une cuve au moins en fonction d'un niveau de remplissage de la cuve et d'un état courant de mer ou d'un état courant de mouvement du navire, y compris pour des valeurs du niveau de remplissage de la cuve et pour des états courants de mer ou de mouvement du navire pour lesquels aucun essai n'a été réalisé. Le modèle statistique est donc utilisable pour estimer une réponse en ballottement d'une cuve en conditions réelles d'utilisation sur un navire.

La cuve d'essai peut être de dimensions réduites par rapport à la cuve dont on cherche à estimer la réponse en ballottement par le modèle statistique. Elle peut présenter une géométrie représentative de la cuve dont on cherche à estimer la réponse en ballottement par le modèle statistique. Il est bien entendu par ailleurs que dans la phrase ou caractéristique « entraîner un modèle statistique par une méthode supervisée sur un ensemble de données d'essais », l'« ensemble de données d'essais » peut aussi comprendre ou consister en des données issues de campagnes dites « réelles », c'est-à-dire obtenues ou relevées sur des navires circulant en tant que transporteur et/ ou utilisateur de gaz liquéfié.

Selon des modes d'exécution, les procédés décrits ci-dessus peuvent comporter une ou plusieurs des caractéristiques suivantes.

Par réponse en ballottement, on désigne tout paramètre et jeu de paramètres qualitatif et/ou quantitatif susceptible de représenter des sollicitations mécaniques auxquelles la cuve est exposée pendant un phénomène de ballotement de la cargaison.

Selon un mode d'exécution, la réponse en ballottement comprend au moins l'un parmi un taux d'impacts de fluide sur les parois de la cuve, une pression maximale sur les parois de la cuve, et une probabilité d'endommagement de la cuve.

Ainsi, le modèle statistique est apte à estimer une probabilité d'endommagement de la cuve et/ou un paramètre permettant d'estimer une telle probabilité d'endommagement.

Selon un mode d'exécution, la méthode d'apprentissage automatique supervisé est une méthode de régression par processus gaussien.

Une méthode de régression par processus gaussien est bien adaptée à l'entraînement du modèle statistique car elle permet de produire un modèle statistique apte à répondre à un problème de régression, pour n'importe quel jeu de données d'entrée, par entraînement à partir d'un nombre relativement limité de données. Néanmoins, il est possible de retenir d'autres méthodes d'apprentissage automatique supervisé sans pour autant sortir du cadre de la présente invention.

Selon un mode d'exécution, au moins une contrainte est imposée au modèle statistique pendant son entraînement par la méthode d'apprentissage automatique supervisé.

Ainsi, l'entraînement du modèle statistique peut être guidé sur la base de considérations physiques élémentaires, comme par exemple l'absence de ballottement dans le cas où le niveau de remplissage de la cuve est nul, et/ou sur la base de considérations obtenues par l'expérience pratique, comme par exemple le fait que des mouvements plus importants ou des dimensions de la cuve plus importantes peuvent potentiellement entraîner une réponse en ballottement plus importante. Il en résulte que la précision de l'estimation de la réponse en ballottement par le modèle statistique est accrue.

Selon un mode d'exécution, le procédé comprend en outre une étape consistant à exclure de l'ensemble de données d'essais des résultats d'essais présentant une réponse en ballottement inférieure à un seuil avant l'étape d'entraînement du modèle statistique.

Ainsi, le modèle statistique est entraîné seulement à partir des données d'essais ayant révélé un ballottement conséquent, plus particulièrement en termes de nombres d'impacts. En effet, selon un aspect de l'invention, le nombre d'occurrences rencontrées est un facteur plus important, pour la convergence statistique, que l'intensité des impacts. Il en résulte que la précision de l'estimation de la réponse en ballottement par le modèle statistique est encore accrue.

Selon un mode d'exécution, le modèle statistique considère une pluralité de cuves, le modèle statistique étant apte à estimer une réponse en ballotement de chaque cuve en fonction de sa position au sein du navire.

Selon un mode d'exécution conforme à la première variante, l'invention fournit aussi un procédé d'obtention d'une base de données utilisable pour estimer une réponse en ballottement d'au moins une cuve étanche et thermiquement isolante pour le transport de gaz liquéfié, le procédé comprenant les étapes consistant à :
- générer une pluralité de vecteurs de données d'entrée comprenant chacun un niveau de remplissage de la cuve et un état courant de mer ; et
- pour chaque vecteur de données d'entrée ainsi généré : obtenir une réponse en ballottement estimée de la cuve à l'aide du modèle statistique obtenu par le procédé décrit ci-dessus conforme à la première variante ; et stocker dans une base de données la réponse en ballottement estimée de la cuve en association avec le vecteur de données d'entrée.

Selon un mode d'exécution conforme à la deuxième variante, l'invention fournit aussi un procédé d'obtention d'une base de données utilisable pour estimer une réponse en ballottement d'au moins une cuve étanche et thermiquement isolante pour le transport de gaz liquéfié, le procédé comprenant les étapes consistant à :
- générer une pluralité de vecteurs de données d'entrée comprenant chacun un niveau de remplissage de la cuve et un état courant de mouvement du navire ; et
- pour chaque vecteur de données d'entrée ainsi généré : obtenir une réponse en ballottement estimée de la cuve à l'aide du modèle statistique obtenu par le procédé décrit ci-dessus conforme à la deuxième variante ; et stocker dans une base de données la réponse en ballottement estimée de la cuve en association avec le vecteur de données d'entrée.

Bien que le modèle statistique soit apte à estimer par le calcul une réponse en ballottement d'une cuve pour des valeurs du niveau de remplissage de la cuve et pour des états courants de mer ou de mouvement du navire pour lesquels aucun essai n'a été réalisé, le calcul nécessaire pour ce faire peut être trop long et/ou nécessiter trop de ressources de calcul pour pouvoir être mis en œuvre à bord d'un navire, pour lequel il est important d'obtenir une estimation de la réponse en ballottement le plus rapidement possible et avec un système embarqué le moins coûteux possible. Une idée à la base de ces procédés est donc d'effectuer la majorité de ces calculs à l'avance sur la base d'une pluralité de vecteurs de données d'entrée, lesquels peuvent être convenablement choisis pour couvrir la totalité d'un domaine de fonctionnement opérationnel du navire, et de stocker dans une base de données la réponse en ballottement estimée de la cuve pour chacun de ces vecteurs de données d'entrée en association avec le vecteur de données d'entrée. La réponse en ballottement estimée de la cuve peut alors être obtenue ou bien par simple lecture de la base de données lorsque le vecteur de données d'entrée est présent dans la base de données, ou bien par interpolation à partir de la base de données sinon. Ceci nécessite un temps de calcul et des ressources de calcul bien moins importantes que l'estimation à partir du modèle statistique lui-même. Il en résulte que le modèle statistique lui-même n'est même plus nécessaire pour effectuer l'estimation du modèle statistique à bord du navire, la seule base de données étant suffisante. L'estimation à partir de la base de données peut alors être effectuée par un système embarqué à bord du navire, voire même par une station au sol qui communique avec le navire, par exemple par radio ou par satellite.

Selon un mode d'exécution conforme à la première variante, l'invention fournit aussi un procédé d'estimation d'une réponse en ballottement d'une cuve étanche et thermiquement isolante pour le transport de gaz liquéfié à bord d'un navire, le procédé comprenant les étapes consistant à :
- déterminer un niveau courant de remplissage de la cuve ;
- déterminer un état courant de mer ;
- générer un vecteur de données d'entrée comprenant le niveau courant de remplissage de la cuve et l'état courant de mer ainsi déterminés ; et
- estimer une réponse en ballottement de la cuve à partir du vecteur de données d'entrée ainsi généré et de la base de données obtenue par le procédé conforme à la première variante.

Selon un mode d'exécution conforme à la deuxième variante, l'invention fournit aussi un procédé d'estimation d'une réponse en ballottement d'une cuve étanche et thermiquement isolante pour le transport de gaz liquéfié à bord d'un navire, le procédé comprenant les étapes consistant à :
- déterminer un niveau courant de remplissage de la cuve ;
- déterminer un état courant de mouvement du navire ;
- générer un vecteur de données d'entrée comprenant le niveau courant de remplissage de la cuve, et l'état courant de mouvement du navire ainsi déterminés ; et
- estimer une réponse en ballottement de la cuve à partir du vecteur de données d'entrée ainsi généré et de la base de données obtenu par le procédé conforme à la deuxième variante.

Grâce à ces procédés, il est possible d'estimer une réponse en ballottement de la cuve grâce au modèle statistique entraîné préalablement sur la base de données d'essais, par le biais de la base de données. Comme on l'a mentionné ci-dessus, cette estimation nécessite un temps de calcul et des ressources de calcul bien moins importantes que l'estimation à partir du modèle statistique lui-même, et peut être effectuée par un système embarqué à bord du navire ou par une station au sol qui communique avec le navire.

Selon un mode d'exécution, une pluralité de cuves sont considérées et le procédé comprend une étape préalable de définition de la position de chacune des cuves au sein du navire.

Selon un mode d'exécution, le procédé comprend en outre une étape consistant à fournir une alarme à un utilisateur si la réponse en ballottement estimée de la cuve excède un seuil d'alerte, et de préférence une étape d'aide à la décision destinée à réduire le ballottement. Cette étape d'aide à la décision peut consister en une proposition de changement de direction ou de trajectoire du navire, en un changement de cap particulièrement adapté pour les ouvrages flottants stationnaires, une modification de la vitesse du navire ou encore un changement du taux de remplissage de la ou des cuves (entre les cuves ou entre une cuve et un réservoir externe au navire pour le cas d'un ouvrage flottant stationnaire).

Par ailleurs, l'alarme peut consister à signaler un problème à corriger immédiatement ou à brève échéance, si possible une alarme désignant la ou les cuves parmi une pluralité de cuves d'un navire qui nécessitent une opération de contrôle et de maintenance en vue d'une éventuelle réparation.

Ainsi, un utilisateur tel qu'un membre d'équipage peut entreprendre toute mesure nécessaire pour limiter le ballottement dans la cuve en cas de nécessité, comme par exemple ralentir ou stopper le navire ou encore changer la route du navire, et donc de diminuer le risque d'endommagement de la cuve.

Selon un mode d'exécution conforme à la première variante, l'invention fournit aussi un système de gestion pour un navire comportant au moins une cuve étanche et thermiquement isolante pour transporter du gaz liquéfié, le système comprenant :
- au moins un capteur de niveau de remplissage pour mesurer un niveau courant de remplissage de la cuve ;
- un dispositif d'évaluation d'état de mer apte à évaluer un état courant de mer ; et
- un moyen de traitement configuré pour générer un vecteur de données d'entrée comprenant un niveau courant de remplissage de la cuve et un état courant de mer évalué par le dispositif d'évaluation d'état de mer, et pour estimer une réponse en ballottement de la cuve à partir du vecteur de données d'entrée ainsi généré et de la base de données obtenue par le procédé conforme à la première variante.

Selon un mode d'exécution conforme à la deuxième variante, l'invention fournit aussi un système de gestion pour un navire comportant au moins une cuve étanche et thermiquement isolante pour transporter du gaz liquéfié, le système comprenant :
- au moins un capteur de niveau de remplissage pour mesurer un niveau courant de remplissage de la cuve ;
- un dispositif d'évaluation d'état courant de mouvement du navire apte à évaluer un état courant de mouvement du navire ; et
- un moyen de traitement configuré pour générer un vecteur de données d'entrée comprenant un niveau courant de remplissage de la cuve et un état courant de mouvement du navire, et pour estimer une réponse en ballottement de la cuve à partir du vecteur de données d'entrée ainsi généré et de la base de données obtenue par le procédé conforme à la deuxième variante.

De tels systèmes procurent les mêmes avantages que les procédés décrits ci-dessus.

Selon un mode d'exécution, le moyen de traitement est en outre configuré pour fournir une alarme à un utilisateur si la réponse en ballottement estimée de la cuve excède un seuil d'alerte et est de préférence configuré pour fournir à l'utilisateur une aide à la décision destinée à réduire le ballottement.

Selon un autre mode d'exécution, l'invention fournit aussi un procédé d'estimation d'une réponse en ballottement d'une cuve étanche et thermiquement isolante pour le transport de gaz liquéfié à bord d'un navire, le procédé comprenant les étapes consistant à :
- déterminer un niveau courant de remplissage de la cuve ;
- estimer des états de mer à venir à partir d'informations météorologiques et d'une route du navire ;
- générer une pluralité de vecteurs de données d'entrée comprenant chacun un niveau courant de remplissage de la cuve et un état de mer à venir estimé ; et
- estimer une réponse en ballottement à venir de la cuve à partir des vecteurs de données d'entrée ainsi générés et de la base de données obtenue par le procédé conforme à la première variante.

Grâce à ce procédé, il est possible d'estimer une réponse en ballottement à venir de la cuve à partir d'informations météorologiques et d'une route du navire, grâce au modèle statistique entraîné préalablement sur la base de données d'essais, par le biais de la base de données. Comme on l'a mentionné ci-dessus, cette estimation nécessite un temps de calcul et des ressources de calcul bien moins importantes que l'estimation à partir du modèle statistique lui-même, et peut être effectuée par un système embarqué à bord du navire ou par une station au sol qui communique avec le navire.

Selon encore un autre mode d'exécution, l'invention fournit aussi un procédé d'estimation d'une réponse en ballottement d'une cuve étanche et thermiquement isolante pour le transport de gaz liquéfié à bord d'un navire, le procédé comprenant les étapes consistant à :
- déterminer un niveau courant de remplissage de la cuve ;
- estimer des états de mouvement du navire à venir à partir d'informations météorologiques et d'une route du navire ;
- générer une pluralité de vecteurs de données d'entrée comprenant chacun un niveau courant de remplissage de la cuve et un état de mouvement du navire à venir estimé ; et
- estimer une réponse en ballottement à venir de la cuve à partir des vecteurs de données d'entrée ainsi générés et de la base de données obtenue par le procédé conforme à la deuxième variante.

Selon un mode d'exécution, le procédé comprend en outre une étape consistant à déterminer une route du navire et/ou une modification du niveau de remplissage de la cuve permettant de diminuer la réponse en ballottement à venir de la cuve. On entend par l'expression « route du navire » un cap de ce navire, la vitesse de ce dernier ou un simple évitement d'une zone géographique. Pour les ouvrages flottants stationnaires (navires, barges), c'est-à-dire présentant une position fixe, le changement de cap se traduit par un changement d'angle entre la direction Nord et l'axe longitudinal de l'ouvrage de manière à orienter ou amener l'ouvrage flottant pour classiquement diminuer les conséquences négatives de la houle et des vagues sur l'ouvrage flottant.

Ainsi, un utilisateur tel qu'un membre d'équipage peut prendre la décision de faire suivre au navire une route permettant de diminuer la réponse en ballottement à venir de la cuve, et donc de diminuer le risque d'endommagement de la cuve.

Selon un autre mode d'exécution, l'invention fournit aussi un système de gestion pour un navire comportant au moins une cuve étanche et thermiquement isolante pour transporter du gaz liquéfié, le système comprenant :
- au moins un capteur de niveau de remplissage pour mesurer un niveau courant de remplissage de la cuve ;
- un dispositif d'estimation d'états de mer apte à estimer des états de mer à venir à partir d'informations météorologiques et d'une route du navire ; et
- un moyen de traitement configuré pour générer une pluralité de vecteurs de données d'entrée comprenant chacun un niveau courant de remplissage de la cuve et un état de mer à venir estimé par le dispositif d'estimation d'états de mer, et pour estimer une réponse en ballottement à venir de la cuve à partir des vecteurs de données d'entrée ainsi générés et de la base de données obtenue par le procédé conforme à la première variante.

Selon encore un autre mode d'exécution, l'invention fournit aussi un système de gestion pour un navire comportant au moins une cuve étanche et thermiquement isolante pour transporter du gaz liquéfié, le système comprenant :
- au moins un capteur de niveau de remplissage pour mesurer un niveau courant de remplissage de la cuve ;
- un dispositif d'estimation d'états de mouvement apte à estimer des états de mouvement du navire à venir à partir d'informations météorologiques et d'une route du navire ; et
- un moyen de traitement configuré pour générer une pluralité de vecteurs de données d'entrée comprenant chacun un niveau courant de remplissage de la cuve et un état de mouvement du navire à venir estimé par le dispositif d'estimation d'états de mouvement, et pour estimer une réponse en ballottement à venir de la cuve à partir des vecteurs de données d'entrée ainsi générés et de la base de données obtenue par le procédé conforme à la deuxième variante.

Selon un mode d'exécution, le moyen de traitement est en outre configuré pour déterminer une route du navire permettant de diminuer la réponse en ballottement à venir de la cuve.

### Brève description des figures

L'invention sera mieux comprise, et d'autres buts, détails, caractéristiques et avantages de celle-ci apparaîtront plus clairement au cours de la description suivante de plusieurs modes d'exécution particuliers de l'invention, donnés uniquement à titre illustratif et non limitatif, en référence aux dessins annexés.
[Fig.1] La [Fig.1] est une représentation schématique d'un navire de transport de gaz liquéfié.
[Fig.2] La [Fig.2] représente un système de gestion intégré dans le navire de la [Fig.1].
[Fig.3] La [Fig.3] représente un système de gestion selon un autre mode d'exécution.
[Fig.4] La [Fig.4] est une représentation schématique d'un dispositif d'essais de réponse en ballottement d'une cuve d'essai.
[Fig.5] La [Fig.5] est un organigramme représentant un procédé d'obtention d'une base de données utilisable pour estimer une réponse en ballottement d'une cuve.
[Fig.6] La [Fig.6] est un organigramme représentant un procédé d'estimation d'une réponse en ballottement d'une cuve.
[Fig.7] La [Fig.7] est un organigramme représentant un autre procédé d'estimation d'une réponse en ballottement d'une cuve
[Fig.8] La [Fig.8] est un organigramme représentant encore un autre procédé d'estimation d'une réponse en ballottement d'une cuve.

### Description des modes de réalisation

Les modes de réalisation ci-après sont décrits en relation avec un navire comportant une double coque formant une structure porteuse dans laquelle sont agencées une pluralité de cuves étanches et thermiquement isolantes. Dans une telle structure porteuse, les cuves présentent par exemple une géométrie polyédrique, par exemple de forme prismatique.

De telles cuves étanches et thermiquement isolantes sont prévues par exemple pour le transport de gaz liquéfié. Le gaz liquéfié est stocké et transporté dans de telles cuves à une température basse ce qui nécessite des parois de cuve thermiquement isolantes afin de maintenir le gaz liquéfié à cette température. Il est donc particulièrement important de maintenir intacte l'intégrité des parois de cuves, y compris les espaces d'isolation thermiques situés sous la membrane d'étanchéité, d'une part pour conserver l'étanchéité de la cuve et éviter les fuites de gaz liquéfié hors des cuves et, d'autre part, éviter les dégradations des caractéristiques isolantes de la cuve afin de maintenir le gaz sous sa forme liquéfiée.

De telles cuves étanches et thermiquement isolantes comportent aussi une barrière isolante ancrée sur la double coque de navire et portant au moins une membrane étanche. A titre d'exemple, de telles cuves peuvent être réalisées selon les technologies commercialisées sous les marques Mark III^{®} ou NO96^{®} de la déposante, ou autres.

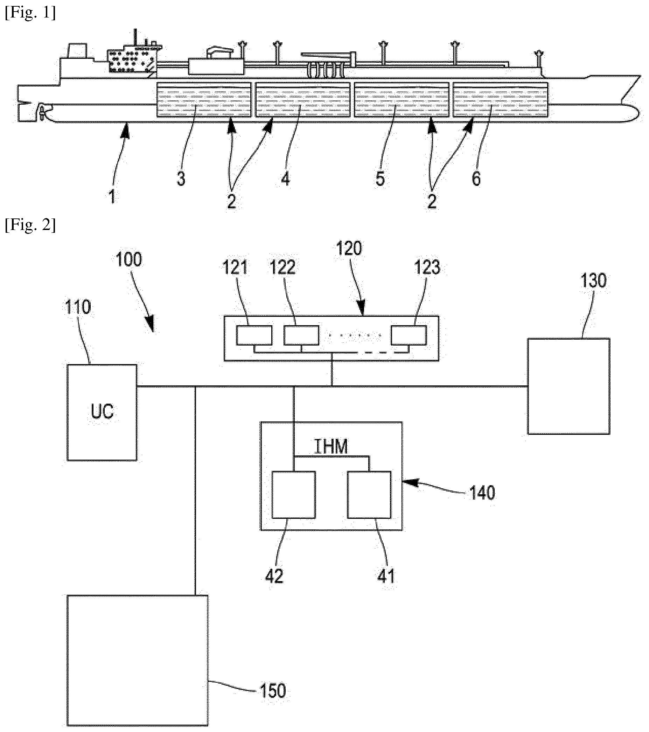

La [Fig.1] illustre un navire 1 comportant quatre cuves 2 étanches et thermiquement isolantes. Les quatre cuves 2 peuvent présenter des états de remplissage identiques ou différents. Lorsqu'il est en mer, le navire 1 est sujet à de nombreux mouvements liés aux conditions de navigation. Ces mouvements du navire 1 se répercutent sur le liquide contenu dans les cuves 3, 4, 5, 6 qui, en conséquence, est sujet à des déplacements dans les cuves 3, 4, 5, 6. Ces mouvements du liquide dans les cuves 3, 4, 5, 6 génèrent des impacts sur les parois de cuves 3, 4, 5, 6 qui peuvent endommager les cuves de manière immédiate s'ils sont trop violents. En outre, le martelage répété des parois des cuves 3, 4, 5, 6 à des niveaux élevés et non destructifs peut entrainer une dégradation d'usure par fatigue desdites parois. Or il est important de conserver l'intégrité des parois de cuves 3, 4, 5, 6 pour conserver l'étanchéité et les caractéristiques d'isolation des cuves 3, 4, 5, 6.

Il est connu d'éviter d'avoir des conditions de navigation critiques pour éviter des mouvements de liquide qui risquent d'endommager la cuve de manière immédiate. Toutefois, il existe toujours un besoin de méthodes permettant d'estimer une réponse en ballottement des cuves pendant la navigation du navire et le cas échéant de prendre les mesures nécessaires pour éviter l'apparition d'un ballottement excessif risquant d'endommager la membrane d'étanchéité primaire de la cuve.

La [Fig.2] illustre un exemple de système de gestion 100 embarqué sur le navire 1. Ce système de gestion 100 comporte une unité centrale 110 connectée à une pluralité de capteurs 120 embarqués permettant d'obtenir différentes mesures de paramètres. Ainsi, les capteurs 120 comportent, par exemple et de manière non exhaustive, au moins un capteur de niveau de remplissage 121, pour chaque cuve, différents capteurs de mouvements 122 du navire et des capteurs de conditions maritimes 123. Le système de gestion 100 comporte également une interface de communication 130 permettant à l'unité centrale 110 de communiquer avec des dispositifs distants par exemple pour obtenir des données météorologiques, des données de position du navire ou autre.

Les capteurs de mouvements 122 du navire déterminent des mouvements mesurés du navire, par exemple en mesurant les accélérations subies par le navire selon trois axes perpendiculaires en translation et en rotation. Pour apprécier les mouvements du navire, on pourra utiliser avantageusement une Unité de Mesure Inertielle, ci-après UMI, qui consiste en un ou plusieurs accéléromètres et/ou un ou plusieurs gyroscopes, par exemple gyroscope mécanique, et/ou un ou plusieurs magnétomètres. Ces unités de mesure, dans l'hypothèse où l'on en utilise plusieurs (du même type ou de deux types différents), sont avantageusement réparties sur le navire de manière à relever une mesure précise du mouvement du navire. On notera qu'une UMI est parfois communément désignée en tant que MRU (de l'anglais Motion Reference Unit).

Les capteurs de conditions maritimes 123 obtiennent un état courant de mer dans l'environnement du navire, comme par exemple une hauteur et une fréquence des vagues dans l'environnement du navire. Par exemple, dans un mode de réalisation, la hauteur et/ou la fréquence des vagues sont fournies à partir d'une observation visuelle effectuée par l'équipage.

Le système de gestion 100 comporte en outre une interface homme-machine 140. Cette interface homme machine 140 comporte un moyen d'affichage 41. Ce moyen d'affichage 41 permet à l'opérateur d'obtenir les différentes informations de gestions calculées par le système ou les mesures obtenues par les capteurs 120 ou même un état de ballottement courant, lequel peut être estimé comme on va le détailler plus loin.

L'interface homme-machine 140 comporte en outre un moyen d'acquisition 42 permettant à l'opérateur de fournir manuellement des grandeurs à l'unité centrale 110, typiquement pour fournir à l'unité centrale 110 des données ne pouvant pas être obtenues par des capteurs car le navire ne comporte pas le capteur nécessaire ou que ce dernier est endommagé. Par exemple, dans un mode de réalisation, le moyen d'acquisition permet à l'opérateur d'entrer des informations sur la hauteur et/ou la fréquence des vagues à partir d'une observation visuelle et/ou d'entrer manuellement un cap et/ou une vitesse du navire.

Le système de gestion 100 comporte en outre une base de données 150. Cette base de données est utilisable pour estimer une réponse en ballottement d'une cuve comme on va le détailler plus loin.

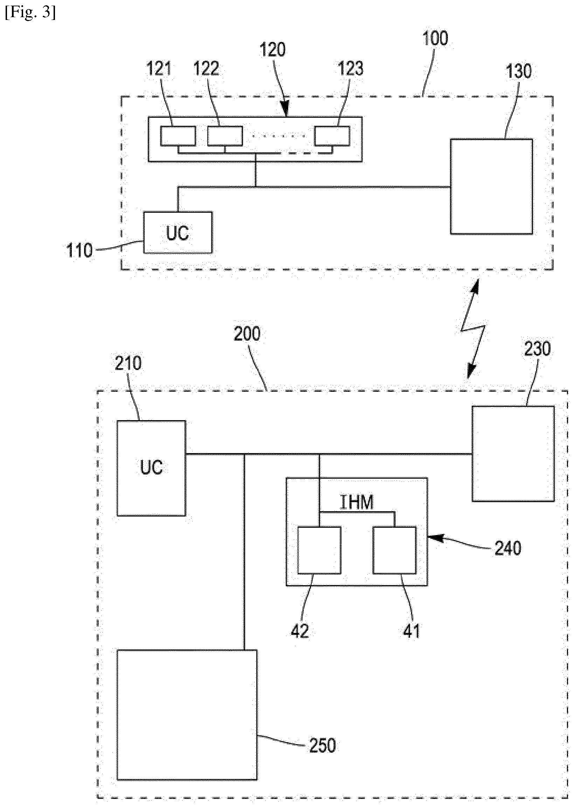

La [Fig.3] illustre un exemple de système de gestion 200 situé à terre et communiquant avec le navire 1. Le navire comporte l'unité centrale 110, les capteurs 120 et une interface de communication 130. Le système de gestion 200 comporte une unité centrale 210, une interface de communication 230, une interface homme machine 240 et une base de données 250. Le fonctionnement du système de gestion 200 est similaire au fonctionnement du système de gestion 100 et ne se différentie que par l'envoi des informations mesurées par les capteurs 120 du navire 1 au système de gestion 200 situé à terre par l'intermédiaire des interfaces de communication 130 et 230. A titre d'exemple, les interfaces de communication peuvent utiliser une transmission de données par radiofréquence terrestre ou satellite.

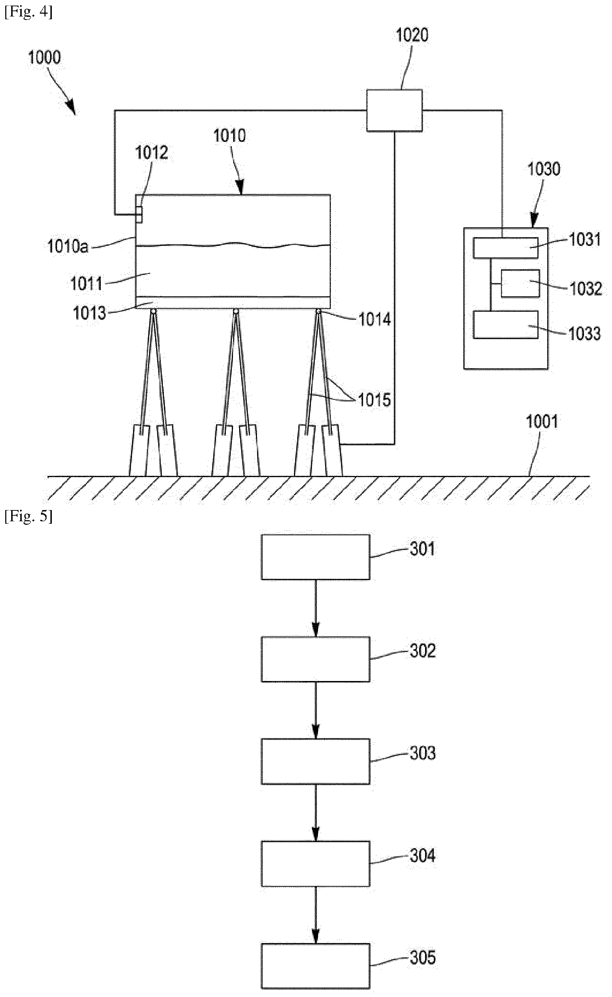

On va maintenant décrire, à l'aide des figures 4 et 5, l'obtention de la base de données 150.

La [Fig.4] représente schématiquement un exemple de dispositif d'essais 1000 permettant de réaliser des essais sur une cuve d'essai 1010. Les essais consistent à soumettre la cuve d'essai 1010 à des mouvements, la cuve d'essai 1010 présentant un niveau de remplissage donné de fluide 1011, et à mesurer une pression sur au moins un point d'une paroi 1010a de la cuve d'essai 1010 à l'aide d'un capteur de pression 1012 et/ou un nombre d'impacts sur au moins une paroi de la cuve d'essai 1010.

La cuve d'essai 1010 peut être de dimensions réduites par rapport à une cuve dont on cherche à estimer la réponse en ballottement, et/ou présenter une géométrie représentative de la cuve dont on cherche à estimer la réponse en ballottement.

Bien entendu, le fluide 1011 est de préférence de même nature, et idéalement à la même température, densité, viscosité, que celui transporté par la cuve dont on cherche à estimer la réponse en ballottement ; il peut notamment s'agir de Gaz de Pétrole Liquéfié (aussi appelé GPL) présentant par exemple une température comprise entre - 50°C et 0°C, ou de Gaz Naturel Liquéfié (GNL) à environ -162°C à pression atmosphérique. De nombreux gaz liquéfiés peuvent aussi être envisagés, notamment le méthane, l'éthane, le propane, le butane, l'ammoniac, le dihydrogène ou l'éthylène.

En outre, il est possible de mesurer une pression sur une pluralité de points d'une paroi 1010a de la cuve d'essai 1010, voire sur plusieurs ou toutes de ces parois, le nombre et la disposition des capteurs de pression 1012 étant adapté en conséquence. Lorsque l'on mesure un nombre d'impacts sur au moins une paroi de la cuve d'essai 1010, cette mesure est effectuée à l'aide d'une pluralité de capteurs de pression 1012 convenablement disposés sur cette paroi. Il est possible de mesurer un nombre d'impacts sur plusieurs des parois de la cuve d'essai 1010 ou sur toutes les parois de la cuve d'essai 1010.

Comme on l'a mentionné ci-dessus, la cuve d'essai 1010 est soumise à des mouvements pendant les essais. Dans l'exemple représenté, le dispositif 1000 comprend ainsi une plateforme 1013 dont est solidaire la cuve d'essai 1010. La plateforme 1013 est entraînée en mouvement par l'action de six vérins hydrauliques 1015 connectés à une de leurs extrémités à la plateforme en trois points de fixation 1014 et à l'autre extrémité à un bâti ou à un sol 1001. Ceci permet d'entraîner la cuve d'essai 1010 en mouvement selon six degrés de liberté, en translation et en rotation. Bien entendu, la cuve d'essai 1010 peut être entraînée en mouvement par des moyens différents.

Le dispositif 1000 comprend en outre une unité de commande d'essai 1020. L'unité de commande d'essai 1020 est configurée pour commander les vérins hydrauliques 1015 afin de soumettre la cuve d'essai 1010 à des mouvements déterminés à l'avance dans un programme d'essais. Dans un exemple de réalisation, ces mouvements sont des mouvements représentatifs d'un mouvement donné du navire, lesquels tiennent de préférence compte de la position de la cuve sur le navire et/ou de la géométrie de la cuve. Dans un autre exemple de réalisation, ces mouvements sont des mouvements représentatifs d'un état de mer donné, lesquels sont convertis en des mouvements correspondants du navire, de préférence en tenant compte de la position de la cuve sur le navire et/ou de la géométrie de la cuve. L'évaluation des mouvements correspondants du navire à partir d'un état de mer donné est une tâche courante dans l'évaluation de la tenue en mer d'un navire. En outre, l'unité de commande d'essai 1020 enregistre les valeurs relevées pendant l'essai par le au moins un capteur de pression 1012.

L'unité de commande d'essai 1020 communique avec une unité de traitement de données d'essais 1030. L'unité de traitement de données d'essais 1030 comprend une interface de communication 1031 permettant de recevoir de l'unité de commande d'essai 1020 les valeurs relevées pendant l'essai par le au moins un capteur de pression 1012 ainsi que les mouvements imposés à la cuve d'essai 1010 pendant l'essai. L'unité de traitement de données d'essais 1030 comprend en outre une mémoire 1033 et une unité centrale 1032.

L'unité de traitement de données d'essais 1030 est configurée pour entraîner, sur l'unité centrale 1032 communiquant avec la mémoire 1033, un modèle statistique par une méthode d'apprentissage automatique. Le modèle statistique est apte à estimer une réponse en ballottement de la cuve en fonction d'un niveau de remplissage de la cuve et d'un état courant de mer et optionnellement d'au moins l'un parmi un tirant d'eau du navire, une vitesse du navire et un cap du navire. La réponse en ballottement comprend au moins l'un parmi un taux d'impacts de fluide sur les parois de la cuve, une pression maximale sur les parois de la cuve, et une probabilité d'endommagement de la cuve. Dans une variante, le modèle statistique considère une pluralité de cuves, le modèle statistique étant apte à estimer une réponse en ballottement de chaque cuve en fonction de sa position au sein du navire.

Plus particulièrement, l'entraînement du modèle statistique est réalisé par une méthode d'apprentissage automatique supervisé. A titre d'exemple, la méthode d'apprentissage automatique supervisé peut être une méthode de régression par processus gaussien. Les méthodes de régression par processus gaussien sont bien connues en tant que telles ; elles sont bien adaptées à l'entraînement du modèle statistique car elles permettent de produire un modèle statistique apte à répondre à un problème de régression, pour n'importe quel jeu de données d'entrée, par entraînement à partir d'un nombre relativement limité de données. Néanmoins, il est possible de retenir d'autres méthodes d'apprentissage automatique supervisé.

L'entraînement du modèle statistique est réalisé à partir des résultats des essais réalisés sur la cuve d'essai 1010. Plus particulièrement, dans un exemple préféré, l'entraînement du modèle statistique est réalisé à partir de la réponse en ballottement de la cuve d'essai 1010 pendant chaque essai, cette réponse en ballottement étant calculée au préalable à partir des valeurs relevées pendant l'essai par le au moins un capteur de pression 1012. La réponse en ballottement de la cuve d'essai 1010 peut comprendre au moins l'un parmi un taux d'impacts de fluide sur une ou certaines des parois 1010a de la cuve d'essai 1010 et une pression maximale sur les parois 1010a de la cuve d'essai 1010 sur une période donnée. Dans une variante, l'entraînement du modèle statistique est réalisé à la fois à partir des résultats des essais réalisés sur la cuve d'essai 1010 et de données d'essais obtenues ou relevées sur des navires circulant en tant que transporteur et/ou utilisateur de gaz liquéfié, une ou plusieurs cuves de ces navires jouant le rôle de la cuve d'essai 1010. Dans une autre variante, l'entraînement du modèle statistique peut être réalisé uniquement à partir de données d'essais obtenues ou relevées sur des navires circulant en tant que transporteur et/ou utilisateur de gaz liquéfié, une ou plusieurs cuves de ces navires jouant le rôle de la cuve d'essai 1010.

On va maintenant décrire, à l'aide de la [Fig.5], un procédé 300 permettant d'obtenir la base de données 150. Les étapes 301 à 305 peuvent être effectuées par l'unité centrale 1032 communiquant avec la mémoire 1033.

Optionnellement, le procédé 300 peut comprendre une étape 301 consistant à exclure de l'ensemble de données d'essais servant à l'entraînement du modèle statistique des résultats d'essais présentant une réponse en ballottement de la cuve d'essai 1010 inférieure à un certain seuil. Ainsi, le modèle statistique est entraîné seulement à partir des données d'essais ayant révélé un ballottement conséquent de la cuve d'essai 1010, ce qui améliore la précision de l'estimation de la réponse en ballottement par le modèle statistique.

Le procédé 300 comprend, après l'éventuelle étape 301, une étape 302 consistant à entraîner le modèle statistique comme on l'a déjà décrit ci-dessus.

Optionnellement, au moins une contrainte est imposée au modèle statistique pendant son entraînement par la méthode d'apprentissage automatique supervisé au cours de l'étape 302. Ces contraintes peuvent être définies sur la base de considérations physiques élémentaires, comme par exemple l'absence de ballottement dans le cas où le niveau de remplissage de la cuve est nul, et/ou sur la base de considérations obtenues par l'expérience pratique, comme par exemple le fait que des mouvements plus importants ou des dimensions de la cuve plus importantes peuvent potentiellement entraîner une réponse en ballottement plus importante. Il en résulte que la précision de l'estimation de la réponse en ballottement par le modèle statistique est accrue.

A l'issue de l'étape 302, on dispose d'un modèle statistique qui est apte à estimer une réponse en ballottement de la cuve en fonction d'un niveau de remplissage de la cuve et d'un état courant de mer et optionnellement d'au moins l'un parmi un tirant d'eau du navire, une vitesse du navire et un cap du navire, et ce pour n'importe quelles valeurs de ces grandeurs, y compris pour lesquelles aucun essai n'a été réalisé sur la cuve d'essai 1010. Toutefois, le calcul nécessaire pour ce faire peut être trop long et/ou nécessiter trop de ressources de calcul pour pouvoir être mis en œuvre à bord d'un navire, pour lequel il est important d'obtenir une estimation de la réponse en ballottement le plus rapidement possible et avec un système embarqué le moins coûteux possible. C'est pourquoi, après l'étape 302, on met en œuvre une étape 303 consistant à générer une pluralité de vecteurs de données d'entrée comprenant chacun un niveau de remplissage de la cuve et un état courant de mer, suivie d'une étape 304 consistant à, pour chaque vecteur de données d'entrée généré à l'étape 303 : obtenir une réponse en ballottement estimée de la cuve à l'aide du modèle statistique à l'étape 302 ; et stocker dans une base de données la réponse en ballottement estimée de la cuve en association avec le vecteur de données d'entrée.

Optionnellement, dans une étape 305, la base de données obtenue à l'étape 304 est transmise au système de gestion 100, ou bien stockée sur un support d'enregistrement lisible par ordinateur. On obtient aussi la base de données 150, dont l'utilisation sera décrite plus loin.

Jusqu'ici, on a décrit un cas où le modèle statistique est apte à estimer une réponse en ballottement de la cuve en fonction au moins d'un niveau de remplissage de la cuve et d'un état courant de mer. Toutefois, en variante, le modèle statistique est apte à estimer une réponse en ballottement de la cuve en fonction d'un niveau de remplissage de la cuve, d'un état courant de mouvement du navire et optionnellement d'au moins l'un parmi un tirant d'eau du navire, une vitesse du navire et un cap du navire. Les étapes 302, 303, 304 sont alors modifiées en conséquence.

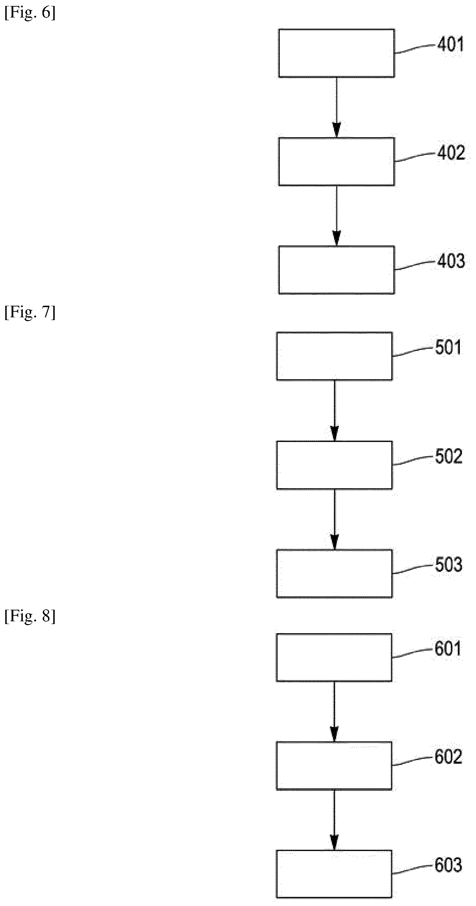

On va maintenant décrire, à l'aide de la [Fig.6], un procédé 400 d'estimation d'une réponse en ballottement d'une cuve à l'aide de la base de données 150. Le procédé 400 peut considérer une pluralité de cuves au lieu d'une seule cuve. Dans ce cas, avant de mettre en œuvre le procédé 400, on peut procéder à une étape préalable de définition de la position de chacune des cuves au sein du navire.

Selon un premier mode de réalisation, l'organigramme de la [Fig.6] est mis en œuvre en totalité sur l'unité centrale 110 formant un moyen de traitement unique. Selon un deuxième mode de réalisation, l'organigramme de la [Fig.6] est partiellement réalisé sur le système de gestion 200 à terre qui communique avec le navire. Suivant ce deuxième mode de réalisation, le navire 1 transmet à la station à terre toutes les informations provenant des capteurs 120, et l'unité centrale 110 et l'unité centrale 210 forment ensemble un moyen de traitement partagé.

Le procédé 400 comprend une première étape 401 consistant à déterminer un niveau courant de remplissage de la cuve et un état courant de mer. Le niveau courant de remplissage de la cuve est typiquement déterminé à partir d'une indication de remplissage fournie par le capteur de niveau de remplissage de la cuve 121. L'état courant de mer peut être déterminé à partir d'indications fournies par les capteurs de conditions maritimes 123 et/ou par communication, par radiofréquence terrestre ou par satellite, avec un réseau de stations météo.

Optionnellement, à l'étape 401, on détermine aussi un tirant d'eau du navire et/ou un cap du navire, typiquement à partir d'indications fournies par les systèmes de bord du navire. Le tirant d'eau du navire est typiquement fourni aux systèmes de bord du navire par un ou plusieurs capteurs de type flotteurs et/ou de pression hydrostatique. Le cap du navire est typiquement fourni aux systèmes de bord du navire par un ou plusieurs compas de navigation.

Le procédé 400 comprend en outre une deuxième étape 402 consistant à générer un vecteur de données d'entrée comprenant les données déterminées à l'étape 401.

Le procédé 400 comprend en outre une troisième étape 403 consistant à estimer une réponse en ballottement de la cuve à partir du vecteur de données d'entrée généré à l'étape 402 et de la base de données 150. Plus concrètement, s'il se trouve que le vecteur de données d'entrée est présent dans la base de données 150, la réponse en ballottement est obtenue par simple lecture de la base de données 150. Toutefois, plus typiquement, la base de données 150 ne contiendra pas le vecteur de données d'entrée, mais des données d'entrée voisines de celles contenues dans le vecteur de données d'entrée. Dans ce cas de figure, la réponse en ballottement sera obtenue par interpolation de la réponse en ballottement associée à deux ou plus vecteurs de données d'entrée voisins présents dans la base de données 150.

Après l'étape 403, la réponse en ballottement obtenue peut être comparée à un seuil d'alerte, et une alarme peut être affichée à un utilisateur, par exemple sur le moyen d'affichage 41, si la réponse en ballottement dépasse le seuil d'alerte. De préférence, après l'affichage de cette alarme, on peut procéder à une étape d'aide à la décision destinée à réduire le ballottement. Cette étape d'aide à la décision peut consister en une proposition de changement de direction ou de trajectoire du navire, en un changement de cap particulièrement adapté pour les ouvrages flottants stationnaires, une modification de la vitesse du navire ou encore un changement du taux de remplissage de la ou des cuves (entre les cuves ou entre une cuve et un réservoir externe au navire pour le cas d'un ouvrage flottant stationnaire). Par ailleurs, l'alarme peut consister à signaler un problème à corriger immédiatement ou à brève échéance, si possible une alarme désignant la ou les cuves qui nécessitent une opération de contrôle et de maintenance en vue d'une éventuelle réparation.

On va maintenant décrire, à l'aide de la [Fig.7], un autre procédé 500 d'estimation d'une réponse en ballottement d'une cuve à l'aide de la base de données 150. Dans cette variante, la base de données 150 est obtenue à partir d'un modèle statistique qui est apte à estimer une réponse en ballottement de la cuve en fonction d'un niveau de remplissage de la cuve, d'un état courant de mouvement du navire et optionnellement d'au moins l'un parmi un tirant d'eau du navire, une vitesse du navire et un cap du navire comme on l'a décrit plus haut en rapport avec la [Fig.4]. Le procédé 500 peut considérer une pluralité de cuves au lieu d'une seule cuve. Dans ce cas, avant de mettre en œuvre le procédé 500, on peut procéder à une étape préalable de définition de la position de chacune des cuves au sein du navire.

Le procédé 500 comprend une première étape 501 consistant à déterminer un niveau courant de remplissage de la cuve et un état courant de mouvement du navire. Le niveau courant de remplissage de la cuve est typiquement déterminé à partir d'une indication de remplissage fournie par le capteur de niveau de remplissage de la cuve 121. L'état courant de mouvement du navire peut être déterminé à partir d'indications fournies par les capteurs de mouvement du navire 122.

Optionnellement, à l'étape 501, on détermine aussi un tirant d'eau du navire et/ou un cap du navire, typiquement à partir d'indications fournies par les systèmes de bord du navire. Le tirant d'eau du navire est typiquement fourni aux systèmes de bord du navire par un ou plusieurs capteurs de type flotteurs et/ou de pression hydrostatique. Le cap du navire est typiquement fourni aux systèmes de bord du navire par un ou plusieurs compas de navigation.

Les capteurs de mouvement du navire 122 ayant typiquement une fréquence d'acquisition très supérieure à la durée typique d'évolution du ballottement de la cuve, les indications fournies par les capteurs de mouvement du navire 122 peuvent être moyennées sur une période d'acquisition, les autres données déterminées à l'étape 501 étant alors moyennées sur cette même période d'acquisition.

Le procédé 500 comprend en outre une deuxième étape 502, analogue à l'étape 402, consistant à générer un vecteur de données d'entrée comprenant les données déterminées à l'étape 501.

Le procédé 500 comprend en outre une troisième étape 503 consistant à estimer une réponse en ballottement de la cuve à partir du vecteur de données d'entrée généré à l'étape 502 et de la base de données 150. L'étape 503 est analogue à l'étape 403 et n'est donc pas expliquée en détail à nouveau.

Après l'étape 503, la réponse en ballottement obtenue peut être comparée à un seuil d'alerte, et une alarme peut être affichée à un utilisateur, par exemple sur le moyen d'affichage 41, si la réponse en ballottement dépasse le seuil d'alerte. De préférence, après l'affichage de cette alarme, on peut procéder à une étape d'aide à la décision destinée à réduire le ballottement. Cette étape d'aide à la décision peut consister en une proposition de changement de direction ou de trajectoire du navire, en un changement de cap particulièrement adapté pour les ouvrages flottants stationnaires, un une modification de la vitesse du navire ou encore un changement du taux de remplissage de la ou des cuves (entre les cuves ou entre une cuve et un réservoir externe au navire pour le cas d'un ouvrage flottant stationnaire). Par ailleurs, l'alarme peut consister à signaler un problème à corriger immédiatement ou à brève échéance, si possible une alarme désignant la ou les cuves qui nécessitent une opération de contrôle et de maintenance en vue d'une éventuelle réparation.

On va maintenant décrire, à l'aide de la [Fig.8], un autre procédé 600 d'estimation d'une réponse en ballottement d'une cuve à l'aide de la base de données 150. Dans cette variante, la base de données 150 est obtenue à partir d'un modèle statistique qui est apte à estimer une réponse en ballottement de la cuve en fonction d'un niveau de remplissage de la cuve, d'un état courant de mer et optionnellement d'au moins l'un parmi un tirant d'eau du navire, une vitesse du navire et un cap du navire.

Le procédé 600 comprend une première étape 601 consistant à déterminer un niveau courant de remplissage de la cuve et à estimer des états de mer à venir. Le niveau courant de remplissage de la cuve est typiquement déterminé à partir d'une indication de remplissage fournie par le capteur de niveau de remplissage de la cuve 121. Les états de mer à venir sont estimés à partir d'informations météorologiques et d'une route du navire. La route du navire est typiquement obtenue à partir d'indications fournies par les systèmes de bord du navire, telles que la vitesse du navire et le cap du navire. Les informations météorologiques peuvent être fournies par les capteurs de conditions maritimes 123 et/ou par communication, par radiofréquence terrestre ou par satellite, avec un réseau de stations météo.

Le procédé 600 comprend en outre une deuxième étape 602 consistant à générer une pluralité de vecteurs de données d'entrée comprenant chacun un niveau courant de remplissage de la cuve et un état de mer à venir estimé.

Optionnellement, à l'étape 601, on détermine aussi un tirant d'eau du navire, un cap du navire et une vitesse du navire, typiquement à partir d'indications fournies par les systèmes de bord du navire. Le tirant d'eau du navire est typiquement fourni aux systèmes de bord du navire par un ou plusieurs capteurs de type flotteurs et/ou de pression hydrostatique. Le cap du navire est typiquement fourni aux systèmes de bord du navire par un ou plusieurs compas de navigation. La vitesse du navire est typiquement fournie aux systèmes de bord du navire par une UMI et/ou par un récepteur de navigation par satellite type GPS.

Le procédé 600 comprend en outre une troisième étape 603 consistant à estimer une réponse en ballottement à venir de la cuve à partir de chacun des vecteurs de données d'entrée généré à l'étape 602 et de la base de données 150. L'étape 603 est analogue à l'étape 403 et n'est donc pas expliquée en détail à nouveau.

Après l'étape 603, on peut déterminer une route du navire permettant de diminuer la réponse en ballottement à venir de la cuve par rapport à la réponse en ballottement de la cuve qui serait à venir si le navire maintenait sa route actuelle. On entend par l'expression de « route de navire » un cap de ce navire, la vitesse de ce dernier ou un simple évitement d'une zone géographique. Pour les ouvrages flottants stationnaires (navires, barges), c'est-à-dire présentant une position fixe, le changement de cap se traduit par un changement d'angle entre la direction Nord et l'axe longitudinal de l'ouvrage de manière à orienter ou amener l'ouvrage flottant pour classiquement diminuer les conséquences négatives de la houle et des vagues sur l'ouvrage flottant. En complément ou en alternative, on peut déterminer une modification du niveau de remplissage de la cuve permettant de diminuer la réponse en ballottement à venir de la cuve.

Une variante du procédé 600 de la [Fig.8] est décrite ci-après. Dans cette variante, la base de données 150 est obtenue à partir d'un modèle statistique qui est apte à estimer une réponse en ballottement de la cuve en fonction d'un niveau de remplissage de la cuve, d'un état courant de mouvement du navire et optionnellement d'au moins l'un parmi un tirant d'eau du navire, une vitesse du navire et un cap du navire.

Dans cette variante, l'étape 601 consiste à déterminer un niveau courant de remplissage de la cuve et à estimer des états de mouvement du navire à venir. Le niveau courant de remplissage de la cuve est typiquement déterminé à partir d'une indication de remplissage fournie par le capteur de niveau de remplissage de la cuve 121. Les états de mouvement du navire à venir sont estimés à partir d'informations météorologiques et d'une route du navire. La route du navire est typiquement obtenue à partir d'indications fournies par les systèmes de bord du navire, telles que la vitesse du navire et le cap du navire. Les informations météorologiques peuvent être fournies par les capteurs de conditions maritimes 123 et/ou par communication, par radiofréquence terrestre ou par satellite, avec un réseau de stations météo. Selon un exemple, les états de mouvement du navire à venir peuvent être estimés en estimant dans un premier temps des états de mer à venir sont estimés à partir d'informations météorologiques et d'une route du navire, puis en estimant dans un second temps des états de mouvement à venir du navire à partir des états de mer à venir ainsi estimés. Il est rappelé que, comme on l'a déjà mentionné ci-dessus, l'évaluation des mouvements correspondants du navire à partir d'un état de mer donné est une tâche courante dans l'évaluation de la tenue en mer d'un navire.

L'étape 602 consiste alors à générer une pluralité de vecteurs de données d'entrée comprenant chacun un niveau courant de remplissage de la cuve et un état de mouvement du navire à venir estimé.

Optionnellement, à l'étape 601, on détermine aussi un tirant d'eau du navire, un cap du navire et une vitesse du navire, comme on l'a déjà mentionné précédemment.

L'étape 603 consiste à estimer une réponse en ballottement à venir de la cuve à partir de chacun des vecteurs de données d'entrée généré à l'étape 602 et de la base de données 150. L'étape 603 est analogue à l'étape 403 et n'est donc pas expliquée en détail à nouveau.

Après l'étape 603, on peut déterminer une route du navire permettant de diminuer la réponse en ballottement à venir de la cuve par rapport à la réponse en ballottement de la cuve qui serait à venir si le navire maintenait sa route actuelle, comme on l'a déjà mentionné précédemment.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention telle que définie par les revendications en annexe.

En outre, il est bien évident qu'une caractéristique ou une combinaison de caractéristiques décrites en rapport avec un procédé s'applique tout autant à un système correspondant, et vice versa.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Procédé (300) d'obtention d'une base de données (150) utilisable pour estimer une réponse en ballottement d'au moins une cuve étanche et thermiquement isolante pour le transport de gaz liquéfié, le procédé comprenant les étapes consistant à :
- entraîner un modèle statistique par une méthode d'apprentissage automatique supervisé sur un ensemble de données d'essais, le modèle statistique étant apte à estimer une réponse en ballottement de la cuve en fonction d'un niveau de remplissage de la cuve et d'un état courant de mer et optionnellement d'au moins l'un parmi un tirant d'eau du navire, une vitesse du navire et un cap du navire, et l'ensemble de données d'essais étant obtenu à partir de résultats d'une pluralité d'essais consistant chacun à soumettre une cuve d'essai (1010) présentant un niveau de remplissage donné à des mouvements et à mesurer une pression sur au moins un point d'une paroi (1010a) de la cuve d'essai (1010) et/ou un nombre d'impacts sur au moins une paroi de la cuve d'essai (1010) ;
- générer (303) une pluralité de vecteurs de données d'entrée comprenant chacun un niveau de remplissage de la cuve et un état courant de mer ; et
- pour chaque vecteur de données d'entrée ainsi généré : obtenir (303) une réponse en ballottement estimée de la cuve à l'aide du modèle statistique ; et stocker (303) dans une base de données la réponse en ballottement estimée de la cuve en association avec le vecteur de données d'entrée.

2. Procédé selon la revendication 1, dans lequel la réponse en ballottement comprend au moins l'un parmi un taux d'impacts de fluide sur les parois de la cuve, une pression maximale sur les parois de la cuve, et une probabilité d'endommagement de la cuve.

3. Procédé selon l'une quelconque des revendications 1 à 2, dans lequel au moins une contrainte est imposée au modèle statistique pendant son entraînement par la méthode d'apprentissage automatique supervisé.

4. Procédé selon l'une quelconque des revendications 1 à 3, comprenant en outre une étape (301) consistant à exclure de l'ensemble de données d'essais des résultats d'essais présentant une réponse en ballottement inférieure à un seuil avant l'étape d'entraînement (302) du modèle statistique.

5. Procédé (300) d'obtention d'une base de données (150) utilisable pour estimer une réponse en ballottement d'au moins une cuve étanche et thermiquement isolante pour le transport de gaz liquéfié, le procédé comprenant les étapes consistant à :
- entraîner un modèle statistique par une méthode d'apprentissage automatique supervisé sur un ensemble de données d'essais, le modèle statistique étant apte à estimer une réponse en ballottement de la cuve en fonction d'un niveau de remplissage de la cuve, d'un état courant de mouvement du navire et optionnellement d'au moins l'un parmi un tirant d'eau du navire, une vitesse du navire et un cap du navire, et l'ensemble de données d'essais étant obtenu à partir de résultats d'une pluralité d'essais consistant chacun à soumettre une cuve d'essai (1010) présentant un niveau de remplissage donné à des mouvements et à mesurer une pression sur au moins un point d'une paroi (1010a) de la cuve d'essai (1010) et/ou un nombre d'impacts sur au moins une paroi de la cuve d'essai (1010) ;
- générer (302) une pluralité de vecteurs de données d'entrée comprenant chacun un niveau de remplissage de la cuve et un état courant de mouvement du navire ; et
- pour chaque vecteur de données d'entrée ainsi généré : obtenir (303) une réponse en ballottement estimée de la cuve à l'aide du modèle statistique ; et stocker (303) dans une base de données la réponse en ballottement estimée de la cuve en association avec le vecteur de données d'entrée.

6. Procédé selon la revendication 5, dans lequel la réponse en ballottement comprend au moins l'un parmi un taux d'impacts de fluide sur les parois de la cuve, une pression maximale sur les parois de la cuve, et une probabilité d'endommagement de la cuve.

7. Procédé selon l'une quelconque des revendications 5 à 6, dans lequel au moins une contrainte est imposée au modèle statistique pendant son entraînement par la méthode d'apprentissage automatique supervisé.

8. Procédé selon l'une quelconque des revendications 5 à 7, comprenant en outre une étape (301) consistant à exclure de l'ensemble de données d'essais des résultats d'essais présentant une réponse en ballottement inférieure à un seuil avant l'étape d'entraînement (302) du modèle statistique.

9. Procédé (400) d'estimation d'une réponse en ballottement d'au moins une cuve étanche et thermiquement isolante pour le transport de gaz liquéfié à bord d'un navire, le procédé comprenant les étapes consistant à :
- déterminer (401) un niveau courant de remplissage de la cuve ;
- déterminer (401) un état courant de mer ;
- générer (402) un vecteur de données d'entrée comprenant le niveau courant de remplissage de la cuve et l'état courant de mer ainsi déterminés ; et
- estimer (403) une réponse en ballottement de la cuve à partir du vecteur de données d'entrée ainsi généré et de la base de données (150) obtenue par le procédé selon l'une quelconque des revendications 1 à 4.

10. Procédé (500) d'estimation d'une réponse en ballottement d'une cuve étanche et thermiquement isolante pour le transport de gaz liquéfié à bord d'un navire, le procédé comprenant les étapes consistant à :
- déterminer (501) un niveau courant de remplissage de la cuve ;
- déterminer (501) un état courant de mouvement du navire ;
- générer (502) un vecteur de données d'entrée comprenant le niveau courant de remplissage de la cuve, et l'état courant de mouvement du navire ainsi déterminés ; et
- estimer (503) une réponse en ballottement de la cuve à partir du vecteur de données d'entrée ainsi généré et de la base de données (150) obtenue par le procédé selon l'une quelconque des revendications 5 à 8.

11. Procédé selon la revendication 9 ou 10, dans lequel une pluralité de cuves sont considérées et le procédé comprend une étape préalable de définition de la position de chacune des cuves au sein du navire.

12. Procédé (400, 500) selon l'une quelconque des revendications 9 à 11, comprenant en outre une étape consistant à fournir une alarme à un utilisateur si la réponse en ballottement estimée de la cuve excède un seuil d'alerte, et de préférence une étape d'aide à la décision destinée à réduire le ballottement.

13. Système de gestion (100) pour un navire (1) comportant au moins une cuve (2) étanche et thermiquement isolante pour transporter du gaz liquéfié, le système comprenant :
- au moins un capteur de niveau de remplissage (121) pour mesurer un niveau courant de remplissage de la une cuve (2) ;
- un dispositif d'évaluation d'état de mer (123) apte à évaluer un état courant de mer ; et
- un moyen de traitement (110) configuré pour générer un vecteur de données d'entrée comprenant un niveau courant de remplissage de la cuve et un état courant de mer évalué par le dispositif d'évaluation d'état de mer (123), et pour estimer une réponse en ballottement de la cuve (2) à partir du vecteur de données d'entrée ainsi généré et de la base de données (150) obtenue par le procédé (300) selon l'une quelconque des revendications 1 à 4.

14. Système de gestion (100) pour un navire (1) comportant au moins une cuve (2) étanche et thermiquement isolante pour transporter du gaz liquéfié, le système comprenant :
- au moins un capteur de niveau de remplissage (121) pour mesurer un niveau courant de remplissage de la cuve (2) ;
- un dispositif d'évaluation d'état courant de mouvement du navire (122) apte à évaluer un état courant de mouvement du navire ; et
- un moyen de traitement (110) configuré pour générer un vecteur de données d'entrée comprenant un niveau courant de remplissage de la cuve et un état courant de mouvement du navire, et pour estimer une réponse en ballottement de la cuve à partir du vecteur de données d'entrée ainsi généré et de la base de données (150) obtenue par le procédé selon l'une quelconque des revendications 5 à 8.

15. Procédé (600) d'estimation d'une réponse en ballottement d'une cuve (2) étanche et thermiquement isolante pour le transport de gaz liquéfié à bord d'un navire (1), le procédé comprenant les étapes consistant à :
- déterminer (601) un niveau courant de remplissage de la cuve ;
- estimer (601) des états de mer à venir à partir d'informations météorologiques et d'une route du navire ;
- générer (602) une pluralité de vecteurs de données d'entrée comprenant chacun un niveau courant de remplissage de la cuve et un état de mer à venir estimé ; et
- estimer (603) une réponse en ballottement à venir de la cuve à partir des vecteurs de données d'entrée ainsi générés et de la base de données (150) obtenue par le procédé selon l'une quelconque des revendications 1 à 4.

16. Procédé (600) d'estimation d'une réponse en ballottement d'une cuve (2) étanche et thermiquement isolante pour le transport de gaz liquéfié à bord d'un navire (1), le procédé comprenant les étapes consistant à :
- déterminer (601) un niveau courant de remplissage de la cuve ;
- estimer (601) des états de mouvement du navire à venir à partir d'informations météorologiques et d'une route du navire ;
- générer (602) une pluralité de vecteurs de données d'entrée comprenant chacun un niveau courant de remplissage de la cuve et un état de mouvement à du navire à venir estimé ; et
- estimer (603) une réponse en ballottement à venir de la cuve à partir des vecteurs de données d'entrée ainsi générés et de la base de données (150) obtenue par le procédé selon l'une quelconque des revendications 5 à 8.

17. Procédé selon la revendication 15 ou 16, comprenant en outre une étape consistant à déterminer une route du navire et/ou une modification du niveau de remplissage de la cuve permettant de diminuer la réponse en ballottement à venir de la cuve.

18. Système (100) de gestion pour un navire (1) comportant au moins une cuve (2) étanche et thermiquement isolante pour transporter du gaz liquéfié, le système comprenant :
- au moins un capteur de niveau de remplissage (121) pour mesurer un niveau courant de remplissage de la cuve (2) ;
- un dispositif d'estimation d'états de mer (123) apte à estimer des états de mer à venir à partir d'informations météorologiques et d'une route du navire (1) ; et
- un moyen de traitement (110) configuré pour générer une pluralité de vecteurs de données d'entrée comprenant chacun un niveau courant de remplissage de la cuve et un état de mer à venir estimé par le dispositif d'estimation d'états de mer (123), et pour estimer une réponse en ballottement à venir de la cuve à partir des vecteurs de données d'entrée ainsi générés et de la base de données (150) obtenue par le procédé selon l'une quelconque des revendications 1 à 4.

19. Système (100) de gestion pour un navire (1) comportant au moins une cuve (2) étanche et thermiquement isolante pour transporter du gaz liquéfié, le système comprenant :
- au moins un capteur de niveau de remplissage (121) pour mesurer un niveau courant de remplissage de la cuve (2) ;
- un dispositif d'estimation d'états de mouvement apte à estimer des états de mouvement du navire à venir à partir d'informations météorologiques et d'une route du navire (1) ; et
- un moyen de traitement (110) configuré pour générer une pluralité de vecteurs de données d'entrée comprenant chacun un niveau courant de remplissage de la cuve et un état de mouvement du navire à venir estimé par le dispositif d'estimation d'états de mouvement, et pour estimer une réponse en ballottement à venir de la cuve à partir des vecteurs de données d'entrée ainsi générés et de la base de données (150) obtenue par le procédé selon l'une quelconque des revendications 5 à 8.

20. Système selon la revendication 18 ou 19, dans lequel le moyen de traitement (110) est en outre configuré pour déterminer une route du navire permettant de diminuer la réponse en ballottement à venir de la cuve.

## Patentansprüche

1. Verfahren (300) zum Erhalten einer Datenbank (150), die zum Schätzen einer Schwankungsreaktion von mindestens einem dichten und wärmeisolierenden Gefäß für den Transport von Flüssiggas verwendbar ist, wobei das Verfahren die folgenden Schritte umfasst:
- Trainieren eines statistischen Modells durch eine Methode des maschinellen Lernens, die auf einem Testdatensatz überwacht wird, wobei das statistische Modell in der Lage ist, eine Schwankungsreaktion des Gefäßes in Abhängigkeit von einem Füllstand des Gefäßes und einem aktuellem Seegang und optional zwischen einem Tiefgang des Schiffes, einer Geschwindigkeit des Schiffes und einem Kurs des Schiffes, zu schätzen, und wobei der Testdatensatz aus den Ergebnissen einer Vielzahl von Tests erhalten wird, die jeweils darin bestehen, ein Testgefäß (1010) mit einem gegebenen Füllstand Bewegungen auszusetzen und einen Druck an mindestens einem Punkt einer Wand (1010a) des Testgefäßes(1010) und/oder eine Anzahl von Stößen auf mindestens eine Wand des Testgefäßes (1010) zu messen;
- Erzeugen (303) einer Vielzahl von Eingabedatenvektoren, die jeweils einen Füllstand des Gefäßes und einen aktuellen Seegang umfassen; und
- für jeden so erzeugten Eingabedatenvektor: Erhalten (303) einer geschätzten Schwankungsreaktion des Gefäßes unter Verwendung des statistischen Modells; und Speichern (303) der geschätzten Schwankungsreaktion des Gefäßes in Verbindung mit dem Eingabedatenvektor in einer Datenbank.

2. Verfahren gemäß Anspruch 1, wobei das Schwankungsverhalten mindestens eines ausgewählt zwischen einer Flüssigkeitsaufprallrate auf die Wände des Gefäßes, einen maximalen Druck auf die Wände des Gefäßes und eine Wahrscheinlichkeit einer Beschädigung des Gefäßes umfasst.

3. Verfahren nach einem der Ansprüche 1 bis 2, wobei dem statistischen Modell während des Trainierens durch die Methode des maschinellen Lernens mindestens eine Einschränkung auferlegt wird.

4. Verfahren nach einem der Ansprüche1 bis 3, weiterhin umfassend einen Schritt (301) des Ausschließens von Testergebnissen aus dem Testdatensatz, die eine Schwankungsreaktion unterhalb eines Schwellenwerts aufweisen, vor dem Schritt des Trainierens (302) des statistischen Modells.

5. Verfahren (300) zum Erhalten einer Datenbank (150), die zum Schätzen einer Schwankungsreaktion von mindestens einem dichten und wärmeisolierenden Gefäß für den Transport von Flüssiggas verwendbar ist, wobei das Verfahren die folgenden Schritte umfasst:
- Trainieren eines statistischen Modells durch eine Methode des maschinellen Lernens, die auf einem Testdatensatz überwacht wird, wobei das statistische Modell in der Lage ist, eine Schwankungsreaktion des Gefäßes in Abhängigkeit von einem Füllstand des Gefäßes, einem aktuellen Zustandes der Schiffsbewegung und optional zwischen einem Tiefgang des Schiffes, einer Geschwindigkeit des Schiffes und einem Kurs des Schiffes, zu schätzen, und wobei der Testdatensatz aus den Ergebnissen einer Vielzahl von Tests erhalten wird, die jeweils darin bestehen, ein Testgefäß (1010) mit einem gegebenen Füllstand Bewegungen auszusetzen und einen Druck an mindestens einem Punkt einer Wand (1010a) des Testgefäßes(1010) und/oder eine Anzahl von Stößen auf mindestens eine Wand des Testgefäßes (1010) zu messen;
- Erzeugen (303) einer Vielzahl von Eingabedatenvektoren, die jeweils einen Füllstand des Gefäßes und einen Strömungszustandes der Schiffsbewegung umfassen; und
- für jeden so erzeugten Eingabedatenvektor: Erhalten (303) einer geschätzten Schwankungsreaktion des Gefäßes unter Verwendung des statistischen Modells; und Speichern (303) der geschätzten Schwankungsreaktion des Gefäßes in Verbindung mit dem Eingabedatenvektor in einer Datenbank.

6. Verfahren gemäß Anspruch 5, wobei das Schwankungsverhalten mindestens eines ausgewählt zwischen einer Flüssigkeitsaufprallrate auf die Wände des Gefäßes, einen maximalen Druck auf die Wände des Gefäßes und eine Wahrscheinlichkeit einer Beschädigung des Gefäßes umfasst.

7. Verfahren nach einem der Ansprüche 5 bis 6, wobei dem statistischen Modell während des Trainierens durch die Methode des maschinellen Lernens mindestens eine Einschränkung auferlegt wird.

8. Verfahren nach einem der Ansprüche 5 bis 7, weiterhin umfassend einen Schritt (301) des Ausschließens von Testergebnissen aus dem Testdatensatz, die eine Schwankungsreaktion unterhalb eines Schwellenwerts aufweisen, vor dem Schritt des Trainierens (302) des statistischen Modells.

9. Verfahren (400) zum Schätzen einer Schwankungsreaktion von mindestens einem dichten und wärmeisolierenden Gefäß für den Transport von Flüssiggas an Bord eines Schiffes, wobei das Verfahren die folgenden Schritte umfasst:
- Ermitteln (401) eines aktuellen Füllstands des Gefäßes;
- Ermitteln (401) eines aktuellen Seegangs;
- Erzeugen (402) eines Eingabedatenvektors, der den ermittelten aktuellen Füllstand des Gefäßes und den ermittelten aktuellen Seegang umfasst; und
- Schätzen (403) einer Schwankungsreaktion des Gefäßes aus dem so erzeugten Eingabedatenvektor und der Datenbank (150), die durch das Verfahren nach einem der Ansprüche 1 bis 4 erzeugt wurde.

10. Verfahren (500) zum Schätzen einer Schwankungsreaktion von einem dichten und wärmeisolierenden Gefäß für den Transport von Flüssiggas an Bord eines Schiffes, wobei das Verfahren die folgenden Schritte umfasst:
- Ermitteln (501) eines aktuellen Füllstands des Gefäßes;
- Ermitteln (501) eines aktuellen Seeganges;
- Erzeugen (502) eines Eingabedatenvektors, der den ermittelten aktuellen Füllstand des Gefäßes und den ermittelten aktuellen Seegang umfasst; und
- Schätzen (503) einer Schwankungsreaktion des Gefäßes aus dem so erzeugten Eingabedatenvektor und der Datenbank (150), die durch das Verfahren nach einem der Ansprüche 5 bis 8 erzeugt wurde.

11. Verfahren gemäß Anspruch 9 oder 10, wobei eine Vielzahl von Gefäßen in Betracht gezogen wird und das Verfahren einen vorherigen Schritt des Definierens der Position jedes der Gefäße innerhalb des Schiffes umfasst.

12. Verfahren (400, 500) gemäß einem der Ansprüche 9 bis 11, weiterhin umfassend einen Schritt des Bereitstellens eines Alarmes für einen Benutzer, wenn die geschätzte Schwankungsreaktion des Gefäßes eine Warnschwelle überschreitet, und vorzugsweise einen Schritt der Entscheidungshilfe zum Reduzieren der Pendelreaktion.

13. Verwaltungssystem (100) für ein Schiff (1) mit mindestens einem dichten und wärmeisolierenden Gefäß (2) zum Transport von Flüssiggas, wobei das System Folgendes umfasst:
- mindestens einen Füllstandsensor (121) zum Messen eines aktuellen Füllstands des einen Gefäßes (2);
- eine Vorrichtung zur Bewertung des Seegangs (123), die einen aktuellen Seegang bewerten kann; und
- eine Verarbeitungsvorrichtung (110), die ausgebildet ist, um einen Eingabedatenvektor zu erzeugen, der einen aktuellen Füllstand des Gefäßes und einen aktuellen, von der Vorrichtung zur Bewertung des Seeganges( 123) ermittelten Seegang umfasst, und um eine Schwankungsreaktion des Gefäßes (2) aus dem so erzeugten Eingabedatenvektor und der Datenbank (150), die durch das Verfahren (300) gemäß einem der Ansprüche 1 bis 4 erhalten wurde, zu ermitteln.

14. Verwaltungssystem (100) für ein Schiff (1) mit mindestens einem dichten und wärmeisolierenden Gefäß (2) zum Transport von Flüssiggas, wobei das System Folgendes umfasst:
- mindestens einen Füllstandsensor (121) zum Messen eines aktuellen Füllstands des einen Gefäßes (2);
- eine Bewertungsvorrichtung (122) für den aktuellen Bewegungszustand des Schiffes, die einen aktuellen Bewegungszustand des Schiffes bewerten kann; und
- eine Verarbeitungsvorrichtung (110), die ausgebildet ist, um einen Eingabedatenvektor zu erzeugen, der einen aktuellen Füllstand des Gefäßes und einen aktuellen Bewegungszustand des Schiffes umfasst, und um eine Schwankungsreaktion des Gefäßes (2) aus dem so erzeugten Eingabedatenvektor und der Datenbank (150), die durch das Verfahren (300) gemäß einem der Ansprüche 5 bis 8 erhalten wurde, zu ermitteln.

15. Verfahren (600) zum Schätzen einer Schwankungsreaktion eines dichten und wärmeisolierenden Gefäßes (2) für den Transport von Flüssiggas an Bord eines Schiffes (1), wobei das Verfahren die folgenden Schritte umfasst:
- Ermitteln (601) eines aktuellen Füllstands des Gefäßes;
- Schätzen (601) von zukünftigem Seegang auf Grundlage von Wetterinformationen und einer Route des Schiffs;
- Erzeugen (602) einer Vielzahl von Eingabedatenvektoren, die jeweils einen aktuellen Füllstand des Gefäßes und einem geschätzten zukünftigen Seegang umfassen; und
- Schätzen (503) einer Schwankungsreaktion des Gefäßes aus dem so erzeugten Eingabedatenvektor und der Datenbank (150), die durch das Verfahren nach einem der Ansprüche 1 bis 4 erzeugt wurde.

16. Verfahren (600) zum Schätzen einer Schwankungsreaktion eines dichten und wärmeisolierenden Gefäßes (2) für den Transport von Flüssiggas an Bord eines Schiffes (1), wobei das Verfahren die folgenden Schritte umfasst:
- Ermitteln (601) eines aktuellen Füllstands des Gefäßes;
- Schätzen (601) von zukünftigen Bewegungen des Schiffes auf Grundlage von Wetterinformationen und einer Route des Schiffs;
- Erzeugen (602) einer Vielzahl von Eingabedatenvektoren, die jeweils einen aktuellen Füllstand des Gefäßes und eine geschätzte zukünftige Bewegung des Schiffes umfassen; und
- -Schätzen (503) einer Schwankungsreaktion des Gefäßes aus dem so erzeugten Eingabedatenvektor und der Datenbank (150), die durch das Verfahren nach einem der Ansprüche 5 bis 8 erzeugt wurde.

17. Verfahren gemäß Anspruch 15 oder 16, weiterhin umfassend einen Schritt des Bestimmens einer Schiffsroute und/oder einer Änderung des Füllstands des Gefäßes, wodurch die zukünftige Schwankungsreaktion des Gefäßes verringert werden kann.

18. Verwaltungssystem (100) für ein Schiff (1) mit mindestens einem dichten und wärmeisolierenden Gefäß (2) zum Transport von Flüssiggas, wobei das System Folgendes umfasst:
- mindestens einen Füllstandsensor (121) zum Messen eines aktuellen Füllstands des einen Gefäßes (2);
- eine Vorrichtung zur Bewertung von Seegang (123), die bevorstehenden Seegang auf Grundlage von Wetterinformationen und einer Route des Schiffs bewerten kann; und
- eine Verarbeitungsvorrichtung (110), die ausgebildet ist, um eine Vielzahl von Eingabedatenvektor zu erzeugen, wobei jeder einen aktuellen Füllstand des Gefäßes und eine, von der Vorrichtung zur Bewertung des Seeganges (123) ermittelten bevorstehenden Seegang umfasst, und um eine Schwankungsreaktion des Gefäßes (2) aus den so erzeugten Eingabedatenvektoren und der Datenbank (150), die durch das Verfahren gemäß einem der Ansprüche 1 bis 4 erhalten wurde, zu ermitteln.

19. Verwaltungssystem (100) für ein Schiff (1) mit mindestens einem dichten und wärmeisolierenden Gefäß (2) zum Transport von Flüssiggas, wobei das System Folgendes umfasst:
- mindestens einen Füllstandsensor (121) zum Messen eines aktuellen Füllstands des einen Gefäßes (2);
- eine Vorrichtung zur Bewertung von Bewegungen, die eine bevorstehenden bevorstehende Bewegung des Schiffes auf Grundlage von Wetterinformationen und einer Route des Schiffs bewerten kann; und
- eine Verarbeitungsvorrichtung (110), die ausgebildet ist, um eine Vielzahl von Eingabedatenvektor zu erzeugen, wobei jeder einen aktuellen Füllstand des Gefäßes und eine, von der Vorrichtung zur Bewertung von Bewegungen ermittelte bevorstehende Bewegung des Schiffes umfasst, und um eine Schwankungsreaktion des Gefäßes (2) aus den so erzeugten Eingabedatenvektoren und der Datenbank (150), die durch das Verfahren gemäß einem der Ansprüche 5 bis 8 erhalten wurde, zu ermitteln.

20. System nach Anspruch 18 oder 19, wobei die Verarbeitungsvorrichtung (110) weiterhin so konfiguriert ist, dass sie einen Kurs des Schiffes bestimmt, der die zukünftige Schwankungsreaktion des Gefäßes verringert.

## Claims

1. Method (300) for obtaining a database (150) usable to estimate a sloshing response of at least one sealed thermally insulating tank for the transport of liquefied gas, the method comprising the steps consisting in:
- training (302) a statistical model by a supervised machine learning method on a set of test data, the statistical model being able to estimate a sloshing response of the tank as a function of a level of filling of the tank and of a current sea state and optionally at least one of the following: a draft of the ship, a speed of the ship and a heading of the ship, and the set of test data being obtained from results of a plurality of tests each consisting in subjecting a test tank (1010) having a given level of filling to movements and measuring a pressure at at least one point on a wall (1010a) of the test tank (1010) and/or a number of impacts on at least one wall of the test tank (1010);
- generating (303) a plurality of input data vectors each comprising a level of filling of the tank and a current sea state; and
- for each input data vector generated in this way: obtaining (303) an estimated sloshing response of the tank with the aid of the statistical model; and storing (303) in a database the estimated sloshing response of the tank in association with the input data vector.

2. Method according to Claim 1, in which the sloshing response comprises at least one of a number of impacts of fluid on the walls of the tank, a maximum pressure on the walls of the tank, and a probability of damage to the tank.

3. Method according to any of Claims 1 to 2, in which at least one constraint is imposed on the statistical model during its training by the supervised machine learning method.

4. Method according to any of Claims 1 to 3, further comprising a step (301) consisting in excluding from the set of test data test results featuring a sloshing response below a threshold before the step (302) of training the statistical model.

5. Method (300) for obtaining a database (150) usable to estimate a sloshing response of at least one sealed thermally insulating tank for the transport of liquefied gas, the method comprising the steps consisting in:
- training (302) a statistical model by a supervised machine learning method on a set of test data, the statistical model being able to estimate a sloshing response of the tank as a function of a level of filling of the tank, a current state of movement of the ship and optionally of at least one of the following: a draft of the ship, a speed of the ship and a heading of the ship, and the set of test data being obtained from results of a plurality of tests each consisting in subjecting a test tank (1010) having a given level of filling to movements and measuring a pressure at at least one point on a wall (1010a) of the test tank (1010) and/or a number of impacts on at least one wall of the test tank (1010);
- generating (302) a plurality of input data vectors each comprising a level of filling of the tank and a current state of movement of the ship; and
- for each input data vector generated in this way: obtaining (303) an estimated sloshing response of the tank with the aid of the statistical model; and storing (303) in a database the estimated sloshing response of the tank in association with the input data vector.

6. Method according to Claim 5, in which the sloshing response comprises at least one of a number of impacts of fluid on the walls of the tank, a maximum pressure on the walls of the tank, and a probability of damage to the tank.

7. Method according to any of Claims 5 to 6, in which at least one constraint is imposed on the statistical model during its training by the supervised machine learning method.

8. Method according to any of Claim 5 to 7, further comprising a step (301) consisting in excluding from the set of test data test results featuring a sloshing response below a threshold before the step (302) of training the statistical model.

9. Method (400) for estimating a sloshing response of at least one sealed and thermally insulating tank for the transport of liquefied gas onboard a ship, the method comprising the steps consisting in:
- determining (401) a current level of filling of the tank;
- determining (401) a current sea state;
- generating (402) an input data vector comprising the current level of filling of the tank and the current sea state determined in this way; and
- estimating (403) a sloshing response of the tank from the input data vector generated in this way and from the database (150) obtained by the method according to any of Claims 1 to 4.

10. Method (500) for estimating a sloshing response of at least one sealed and thermally insulating tank for the transport of liquefied gas onboard a ship, the method comprising the steps consisting in:
- determining (501) a current level of filling of the tank;
- determining (501) a current state of movement of the ship;
- generating (502) an input data vector comprising the current level of filling of the tank and the current state of movement of the ship determined in this way; and
- estimating (503) a sloshing response of the tank from the input data vector generated in this way and from the database (150) obtained by the method according to any of Claims 5 to 8.

11. Method according to Claim 9 or 10, in which a plurality of tanks are considered and the method comprises a previous step of definition of the position of each of the tanks of the ship.

12. Method (400, 500) according to any of Claim 9 to 11, further comprising a step consisting in furnishing an alarm to a user if the estimated sloshing response of the tank exceeds an alert threshold, and preferably a step of assisting the decision intended to reduce the sloshing.

13. Management system (100) for a ship (1) including at least one sealed and thermally insulating tank (2) for transporting liquefied gas, the system comprising:
- at least one filling level sensor (121) for measuring a current state of filling of the tank (2);
- a device (123) for evaluation of the sea state able to evaluate a current sea state; and
- a processing means (110) configured to generate an input data vector comprising a current level of filling of the tank and a current sea state evaluated by the sea state evaluation device (123) and to estimate a sloshing response of the tank (2) from the input data vector generated in this way and from the database (150) obtained by the method (300) according to any of Claim 1 to 4.

14. Management system (100) for a ship (1) including at least one sealed and thermally insulating tank (2) for transporting liquefied gas, the system comprising:
- at least one filling level sensor (121) for measuring a current state of filling of the tank (2);
- a device (122) for evaluation of the current state of movement of the ship able to evaluate a current state of movement of the ship; and
- a processing means (110) configured to generate an input data vector comprising a current level of filling of the tank and a current state of movement of the ship and to estimate a sloshing response of the tank from the input data vector generated in this way and from the database (150) obtained by the method according to any of Claim 5 to 8.

15. Method (600) of estimating a sloshing response of a sealed and thermally insulating tank (2) for the transport of liquefied gas onboard a ship (1), the method comprising the steps consisting in:
- determining (601) a current level of filling of the tank;
- estimating (601) future sea states from meteorological information and a course of the ship;
- generating (602) a plurality of input data vectors each comprising a current level of filling of the tank and an estimated future sea state; and
- estimating (603) a future sloshing response of the tank from the input data vectors generated in this way and from the database (150) obtained by the method according to any of Claims 1 to 4.

16. Method (600) of estimating a sloshing response of a sealed and thermally insulating tank (2) for the transport of liquefied gas onboard a ship (1), the method comprising the steps consisting in:
- determining (601) a current level of filling of the tank;
- estimating (601) future states of movement of the ship from meteorological information and a course of the ship;
- generating (602) a plurality of input data vectors each comprising a current level of filling of the tank and an estimated future state of movement of the ship; and
- estimating (603) a future sloshing response of the tank from the input data vectors generated in this way and from the database (150) obtained by the method according to any of Claim 5 to 8.

17. Method according to Claim 15 or 16, further comprising a step consisting in determining a course of the ship and/or a modification of the level of filling of the tank enabling reduction of the future sloshing response of the tank.

18. Management system (100) for a ship (1) including at least one sealed and thermally insulating tank (2) for transporting liquefied gas, the system comprising:
- at least one level of filling sensor (121) for measuring a current level of filling of the tank (2);
- a sea state estimation device (123) able to estimate future sea states from meteorological information and from a course of the ship (1); and
- a processing means (110) configured to a generate a plurality of input data vectors each comprising a current level of filling of the tank and a future sea state estimated by the sea state estimation device (123), and to estimate a future sloshing response of the tank from the input data vectors generated in this way and from the database (150) obtained by the method according to any of Claims 1 to 4.

19. Management system (100) for a ship (1) including at least one sealed and thermally insulating tank (2) for transporting liquefied gas, the system comprising:
- at least one level of filling sensor (121) for measuring a current level of filling of the tank (2);
- a state of movement estimation device able to estimate future sea states from meteorological information and from a course of the ship (1); and
- a processing means (110) configured to a generate a plurality of input data vectors each comprising a current level of filling of the tank and a future state of movement of the ship estimated by the state of movement of the ship estimation device, and to estimate a future sloshing response of the tank from the input data vectors generated in this way and from the database (150) obtained by the method according to any of Claims 5 to 8.

20. System according to Claim 18 or 19, in which the processing means (110) is further configured to determine a course of the ship enabling reduction of the future sloshing response of the tank.
